# FASCICULE DE BREVET EUROPEEN

(11) **EP 1 417 651 B1**
(45) Date de publication et mention de la délivrance du brevet: **02.12.2009**
(21) Numéro de dépôt: 02774874.8
(22) Date de dépôt: 13.08.2002
(51) Int. Cl.: G07C 9/00, G06F 1/00

(54) **DISPOSITIF ET PROCEDE DE RECONNAISSANCE D'AU MOINS UN INDIVIDU, DISPOSITIF ET SYSTEME DE CONTROLE D'ACCES ET APPLICATIONS CORRESPONDANTES**
VORRICHTUNG UND VERFAHREN ZUM ERKENNEN WENIGSTENS EINER PERSON, ZUGRIFFSKONTROLLVORRICHTUNG UND -SYSTEM UND ENTSPRECHENDE ANWENDUNGEN
DEVICE AND METHOD OF RECOGNISING AT LEAST ONE INDIVIDUAL, THE CORRESPONDING ACCESS CONTROL DEVICE AND SYSTEM AND APPLICATIONS THEREOF

(30) Priorité: 14.08.2001 FR 0110832
(43) Date de publication de la demande: 12.05.2004
(73) Titulaire: ATMEL NANTES SA, 44306 Nantes Cédex 2 (FR)
(72) Inventeur: DEBELLEIX, Olivier, F-44300 Nantes (FR)
(74) Mandataire: Vidon, Patrice
(86) Numéro de dépôt international: PCT/FR2002/002874
(87) Numéro de publication internationale: WO 2003/017210

(56) Documents cités:
- EP-A- 1 113 405
- WO-A-00/65770
- WO-A-02/01328
- WO-A-98/11750
- FR-A- 2 774 793
- US-A- 5 864 296
- US-A- 6 070 796

## Description

Le domaine de l'invention est celui de la biométrie, c'est-à-dire de la reconnaissance ou de l'identification d'individus à partir de certaines de leurs caractéristiques biométriques (empreinte digitale, empreinte vocale, empreinte oculaire, ...), notamment dans le cadre d'applications prévoyant un accès sécurisé à des lieux, des objets et/ou des données.

Plus précisément, l'invention concerne la sécurisation de la mise en oeuvre de capteurs biométriques.

L'utilisation de la reconnaissance de caractéristiques biométriques pour le contrôle d'accès est une technique bien connue en soi, tant pour accéder à un site ou à une pièce protégée qu'à des données stockées dans une base de données. Les systèmes de ce type comprennent un capteur, par exemple pour relever une image d'une empreinte digitale, et des moyens de traitement et d'analyse de cette image, décidant de la reconnaissance ou de la non-reconnaissance de l'individu.

Une telle approche est par exemple presentée dans le document EP-A-1 113 405.

En première approche, cette technique est séduisante, car elle semble garantir que l'individu présent est bien celui que le système a identifié, et non un tiers mal intentionné.

Une analyse plus poussée montre cependant que cela n'est pas le cas. Il est en effet relativement aisé, pour un pirate, de contourner le système, par exemple en prélevant le signal délivré par le capteur lors de la reconnaissance d'un individu autorisé, puis de reproduire le même signal pour le fournir aux moyens de traitement et d'analyse. Ces derniers concluront alors à une reconnaissance positive, en l'absence de l'individu autorisé.

Il apparaît donc clairement que les systèmes connus n'apportent pas un niveau de sécurité suffisant, pour de nombreuses applications. Cela est dû notamment au fait que ces systèmes mettent en oeuvre des éléments séparés, ce qui implique des flux de données sensibles facilement accessibles et réexploitables entre des éléments séparés.

On a pensé à regrouper dans un même boîtier, ou sur un même circuit imprimé, ces éléments séparés. Mais cela ne change pas le problème, même si cela peut le rendre un peu plus complexe. Les données sensibles circulent sur un bus, par exemple entre le capteur qui relève l'empreinte et le microprocesseur qui la traite et l'analyse. Dès lors, il est possible, pour une personne mal intentionnée, avec des moyens relativement peu complexes, de détecter les signaux circulant sur ce bus, ou de transmettre via ce bus de fausses données au microprocesseur.

Il est à noter que l'identification et l'analyse de ce problème font en eux-mêmes partie de l'invention.

Au-delà de cette forte vulnérabilité des systèmes existants, se pose également le problème important de la protection des informations privées et fortement confidentielles que constituent les informations biométriques. En effet, du fait de l'accessibilité des flux de données codant la caractéristique biométrique, il est possible de créer illicitement une base de données, en vue d'une utilisation interdite par les textes de loi. Il serait par exemple envisageable d'utiliser une telle base de données pour en extraire des caractéristiques individuelles, qui permettraient un ciblage commercial non autorisé par l'individu.

Tant que ces problèmes ne sont pas résolus, il n'est bien sûr ni souhaitable ni envisageable que ces techniques biométriques soient largement utilisées, par exemple dans le cadre d'applications gouvernementales ou bancaires.

L'invention a notamment pour objectif d'apporter une solution à ces problèmes des techniques de l'art antérieur.

Plus précisément, un objectif de l'invention est de fournir une technique permettant l'utilisation de caractéristiques biométriques de façon sûre et fiable. Notamment, l'invention a pour objectif de fournir une telle technique, qui ne permette pas à un pirate potentiel de recueillir et réutiliser des données biométriques d'un tiers.

Un autre objectif de l'invention est de fournir une telle technique, garantissant la confidentialité des empreintes biométriques d'un individu.

L'invention a également pour objectif de fournir une telle technique, qui puisse être mise en oeuvre industriellement à grande échelle, avec un coût de revient acceptable.

Ces objectifs, ainsi que d'autres qui apparaîtront par la suite, sont atteints selon l'invention à l'aide d'un dispositif de reconnaissance d'au moins un individu, comprenant, dans un circuit intégré monolithique obtenu par l'intégration sur un même substrat de silicium de :
- au moins un capteur d'informations biométriques,
- des moyens de traitement desdites informations biométriques,
- des moyens cryptographiques, délivrant au moins une donnée cryptée représentative d'au moins une partie desdites informations biométriques et/ou d'une information de reconnaissance correspondante, et
- des moyens de protection, empêchant l'accès aux données transitant, stockées et/ou traitées dans ledit circuit intégré monolithique, pour former un périmètre sécurisé,
   de façon que les données échangées par le ou lesdits capteurs, lesdits moyens de traitement et lesdits moyens cryptographiques, et notamment lesdites informations biométriques, soient conservées uniquement dans ledit circuit intégré monolithique, restant inaccessibles depuis l'extérieur, et que seules des données cryptées soient délivrées à l'extérieur dudit circuit intégré monolithique.

Ainsi, on empêche l'accès aux informations biométriques, que ce soit pour les réutiliser de façon mal intentionnée ou pour les enregistrer. On garantit donc efficacement la confidentialité et la sécurité, c'est-à-dire l'exactitude de l'identification.

Le fait que tous les moyens soient regroupés dans un module monobloc rend impossible l'accès aux données circulant à l'intérieur. Les moyens cryptographiques permettent de ne laisser sortir que des données non interprétables par un tiers. Selon l'invention, ce module monobloc unique est un circuit intégré monolithique. Cette approche nouvelle et inventive dans ce domaine technique s'avère très efficace, en termes de protection, et aisée à mettre en oeuvre de façon industrielle, tout en permettant de fournir des dispositifs de faible taille et peu consommateurs d'énergie.

Le ou lesdits capteurs sont intégrables sur silicium. Cela permet une fabrication simplifiée (ajout d'une couche supplémentaire correspondant au capteur lors de la fabrication du composant par exemple) et surtout une bonne sécurisation de l'ensemble.

Enfin, ledit circuit intégré monolithique comprend des moyens de protection, ou de sécurisation, empêchant l'accès aux données transitant, stockées et/ou traitées dans ledit circuit intégré monolithique, de façon à définir un périmètre sécurisé. Cela permet de renforcer encore la sécurité, c'est-à-dire de garantir au mieux le non-accès par des tiers aux informations biométriques.

Lesdits moyens de protection empêchant l'accès aux données comprennent au moins un des moyens appartenant notamment au groupe comprenant :
- des moyens de surveillance de l'alimentation électrique dudit circuit intégré monolithique ;
- des moyens de surveillance des caractéristiques d'une horloge synchronisant le fonctionnement dudit dispositif ;
- des moyens de contrôle de la température dudit circuit intégré monolithique;
- des moyens de brouillage des effets électromagnétiques induits par les traitements internes au dispositif ;
- des moyens de protection anti-rayonnement ;
- des moyens de blindage électromagnétiques ;
- des moyens de blindage physique destinés à prévenir et/ou détecter toute tentative d'intrusion physique et/ou électrique sur le dispositif ;
- des moyens de brouillage des informations transitant, traitées et/ou stockées dans le circuit intégré monolithique.

Lesdites informations biométriques traitées par le dispositif de l'invention peuvent être de tout type adéquat. Elles peuvent en particulier appartenir au groupe comprenant :
- des empreintes digitales ;
- des empreintes vocales ;
- des empreintes oculaires ;
- des caractéristiques morphologiques ;
- des caractéristiques comportementales.

Des combinaisons de ces informations sont bien sûr possibles.

De façon avantageuse, le ou lesdits capteurs peuvent notamment appartenir au groupe comprenant :
- des capteurs thermiques ;
- des capteurs de pression ;
- des capteurs optiques ;
- des capteurs de mouvement ;
- des capteurs de rayonnement ;
- des capteurs de caractéristiques électriques ;
- des capteurs de formes physiques.

Par ailleurs, lesdits moyens de traitement comprennent avantageusement des moyens de mise en forme d'au moins un signal délivré par au moins un desdits capteurs et des moyens d'extraction dudit signal mis en forme d'au moins un caractère pertinent, formant une signature numérique permettant d'identifier de manière unique un individu.

Selon un mode de réalisation avantageux de l'invention, lesdits moyens cryptographiques délivrent une signature cryptographique, calculée à l'aide d'au moins une clé stockée dans une unité de stockage dudit circuit intégré monolithique.

De façon préférentielle, ladite signature cryptographique tient compte également d'au moins un paramètre aléatoire généré et communiqué par des moyens indépendants dudit circuit intégré monolithique.

Il peut par exemple s'agir d'une donnée fournie par un dispositif de contrôle d'accès, d'une donnée horodatée et/ou d'une donnée fournie par l'utilisateur. Cela permet d'éviter le risque de "rejeu" par un tiers qui aurait pu enregistrer la signature cryptée.

En fonction de cette signature, des moyens extérieurs peuvent mettre en oeuvre une reconnaissance de l'individu.

Selon une variante particulière de l'invention, le dispositif peut effectuer lui-même cette opération. Dans ce cas, il comprend des moyens de reconnaissance d'au moins un individu, en fonction de données de référence stockées dans ledit circuit intégré monolithique.

Préférentiellement, lesdits moyens de reconnaissance délivrent une information de reconnaissance, indiquant si un individu est ou non reconnu, ladite information de reconnaissance étant cryptée avant d'être émise à l'extérieur dudit module.

Par ailleurs, le dispositif de l'invention comprend avantageusement, dans ledit circuit intégré monolithique, une unité de stockage comprenant au moins un des éléments appartenant au groupe comprenant :
- au moins une clé cryptographique ;
- au moins un mécanisme de traitement sécurisé de clés cryptographiques ;
- au moins une donnée de référence représentative d'un individu ;
- des données et/ou des programmes nécessaires à la mise en oeuvre des moyens présents dans ledit circuit intégré monolithique.

Ladite unité de stockage comprend de façon avantageuse au moins une mémoire de données numériques, appartenant par exemple au groupe comprenant les mémoires flash, les mémoires EEPROM, les mémoires EPROM, les mémoires ROM, les mémoires RAM, les mémoires FeRAM, les mémoires MRAM, les mémoires magnétiques.

Selon un mode particulier de mise en oeuvre de l'invention, le circuit intégré monolithique comprend un capteur d'empreintes digitales, délivrant une image d'empreinte, des moyens de traitement de l'image générée et des moyens d'extraction de minuties sur l'image traitée.

Il s'agit d'un mode de mise en oeuvre simple et efficace.

De façon préférentielle, lesdits moyens de cryptographie mettent en oeuvre au moins un accélérateur de calculs matériel.

L'invention concerne également un procédé de reconnaissance d'au moins un individu selon la revendication 15.

De façon avantageuse, ledit circuit intégré monolithique définit un périmètre sécurisé, en mettant en oeuvre des moyens de protection empêchant l'accès aux données transitant, stockées ou traitées dans ledit circuit intégré monolithique.

Préférentiellement, un tel procédé met en oeuvre au moins un dispositif de reconnaissance comprenant ledit circuit intégré monolithique et au moins un dispositif de contrôle d'accès communiquant avec ledit dispositif, apte à recevoir et traiter des données cryptées délivrées par le ou lesdits dispositifs de reconnaissance, et à autoriser ou à interdire en conséquence un accès à au moins une donnée, au moins un objet et/ou au moins un lieu.

L'invention concerne encore de tels dispositifs de contrôle d'accès, comprenant des moyens d'autorisation ou d'interdiction d'accès à au moins une donnée, au moins un objet et/ou au moins un lieu, et des moyens pour recevoir et traiter des données cryptées délivrées par au moins dispositif de reconnaissance d'au moins un individu tel que décrit plus haut.

L'invention concerne également les systèmes de contrôle d'accès à au moins une donnée, au moins un objet et/ou au moins un lieu, mettant en oeuvre au moins dispositif de reconnaissance d'au moins un individu et au moins un dispositif de contrôle d'accès tels que décrits ci-dessus.

Enfin, l'invention concerne les applications d'au moins un tel dispositif de reconnaissance d'au moins un individu à au moins un des domaines appartenant au groupe comprenant :
- le contrôle d'accès physique ;
- le contrôle d'accès logique ;
- l'identification du porteur dudit dispositif ;
- la mise en oeuvre d'objets nomades ;
- les services bancaires ;
- les signatures électroniques.

Ces caractéristiques et avantages, ainsi que d'autres, apparaîtront plus clairement à la lecture de la description suivante d'un mode de réalisation préférentiel de l'invention, donnée à titre de simple exemple illustratif et non limitatif, et des dessins annexés, parmi lesquels :
- la figure 1 est un schéma fonctionnel illustrant la structure d'un dispositif de reconnaissance selon l'invention ;
- la figure 2 présente un exemple de système d'accès sécurisé mettant en oeuvre l'invention.

L'invention concerne donc une nouvelle approche des systèmes biométriques, reposant notamment sur la mise en oeuvre de moyens cryptographiques, permettant un traitement adapté des informations sensibles, relatives à un individu, de façon qu'une empreinte biométrique non cryptée ne soit jamais accessible à un tiers.

Selon l'invention, comme on le verra par la suite, les moyens mis en oeuvre sont regroupés dans une « puce » unique, sur laquelle est notamment intégré le ou les capteurs mis en oeuvre. Il n'y a ainsi aucune circulation des informations sensibles (notamment l'empreinte biométrique) en dehors de la puce, et il n'est donc pas possible de les relever ou de les remplacer frauduleusement.

En d'autres termes, l'invention prévoit l'intégration du système biométrique complet dans un circuit intégré monolithique, définissant un environnement parfaitement protégé, correspondant à un périmètre sécurisé au-delà duquel l'empreinte biométrique d'un individu ne sort pas.

Des moyens de protection sont de plus prévus, dans le circuit intégré, pour renforcer la sécurisation, en empêchant l'accès aux données.

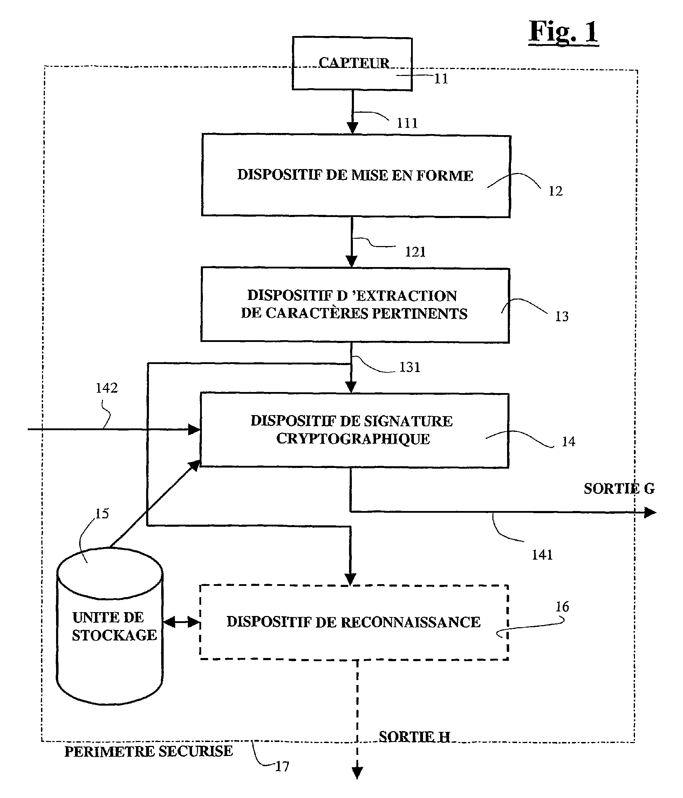

La figure 1 présente, de façon fonctionnelle, un mode de réalisation d'un dispositif selon l'invention, détaillant les différents éléments fonctionnels se trouvant sur le circuit intégré monolithique.

Ce dispositif comprend tout d'abord un capteur 11. Il peut s'agir de tout type de composant électronique, sans aucune restriction, dès lors qu'intégrable sur silicium, permettant la conversion d'une information biométrique physique caractéristique d'un individu (par exemple : empreinte digitale, empreinte vocale, empreinte oculaire...), en une information électrique exploitable par une chaîne de traitement numérique.

Ces capteurs peuvent notamment appartenir au groupe comprenant :
- des capteurs thermiques ;
- des capteurs de pression ;
- des capteurs optiques ;
- des capteurs de mouvement ;
- des capteurs de rayonnement ;
- des capteurs de caractéristiques électriques ;
- des capteurs de formes physiques.

Ils permettent par exemple la détection des informations biométriques suivantes :
- empreintes digitales ;
- empreintes vocales ;
- empreintes oculaires ;
- caractéristiques morphologiques ;
- caractéristiques comportementales.

Dans certains cas particuliers, plusieurs capteurs peuvent être associés dans un même dispositif.

Le signal électrique 121 délivré par le capteur alimente des moyens 12 de mise en forme. Il peut notamment s'agir d'un élément analogique ou numérique permettant le traitement de l'information issue du capteur pour l'adapter au dispositif d'extraction de caractères pertinents. Il pourra, par exemple, consister en une unité de traitement d'image autorisant la reconstruction de l'image du caractère biométrique saisie de façon imparfaite par le capteur, pour la rendre conforme à l'image originale.

Le signal mis en forme 121 est ensuite dirigé vers des moyens 13 d'extraction de caractères pertinents. Ces moyens permettent, par traitement numérique suivant des algorithmes dépendant du caractère physique traité, de compresser la grande quantité d'informations saisies par le capteur en extrayant une sorte de signature numérique représentative, de façon unique, de l'individu.

Selon l'invention, cette signature sécurisée ne sort pas du périmètre sécurisé 17 décrit par la suite, c'est-à-dire du circuit intégré monolithique. Elle n'est donc jamais accessible. Seule une version cryptée 141 est délivrée vers l'extérieur.

Pour cela, le dispositif de l'invention comprend, dans le circuit intégré monolithique, des moyens cryptographiques 14, qui calculent une signature cryptographique (cryptage) de l'information numérique représentant les caractères pertinents en utilisant un algorithme cryptographique, tel que par exemple l'un des algorithmes RSA, Courbes Elliptiques, DES, Triple DES, ou AES.

Les clés nécessaires pour effectuer ce traitement sont stockées dans une unité de stockage 15 sécurisée.

La signature cryptographique calculée 141 prend en compte préférentiellement non seulement l'information numérique représentant les caractères pertinents, mais également au moins un paramètre aléatoire 142 généré et communiqué par le monde extérieur au système, afin d'éviter les possibilités de « rejeu ». Il ne faut pas, en effet, qu'une signature cryptographique qui aurait été enregistrée puisse être réutilisée. Ce paramètre aléatoire peut être une donnée déterminée par un dispositif de contrôle d'accès qui communique avec le dispositif (et qui validera la signature en conséquence), une donnée horodatée, un code fourni par individu, ...

La signature calculée 141 est émise vers l'extérieur par le biais d'une sortie 142.

Ainsi, seuls la signature et le(s) paramètre(s) aléatoire(s) circulent à l'extérieur du périmètre sécurisé. Ils permettent la reconnaissance de la signature par un dispositif extérieur de contrôle d'accès adapté.

Selon une variante de réalisation, on prévoit, à l'intérieur du circuit intégré monolithique, des moyens 16 de reconnaissance. Il s'agit de moyens optionnels, qui rendent le dispositif autonome en permettant la reconnaissance de l'individu en recherchant les caractères pertinents issus de la saisie de l'information biométrique dans une base de caractères de référence, représentant par exemple un ensemble d'individus autorisés, stockée dans l'unité de stockage 15 sécurisée.

La sortie 161 permet d'indiquer si l'individu est reconnu. L'information 151 peut (et devrait) être une signature cryptographique de sorte que le résultat de la recherche ne puisse être corrompu ou falsifié.

L'unité de stockage 15, qui peut être une mémoire de tout type (flash, EEPROM, EPROM, ROM, RAM, FeRAM, MRAM, magnétiques), renferme l'ensemble des informations (données et programmes) nécessaires à la gestion du système global. Elle contient, en particulier, les clés nécessaires aux algorithmes cryptographiques intégrés, et l'ensemble des mécanismes nécessaires à la manipulation sécurisée de ces clés (changement, génération...)

Si l'unité de reconnaissance est intégrée au circuit intégré monolithique, cette unité de stockage 15 peut également contenir une base de caractères pertinents de référence permettant de déterminer si un individu fait partie d'un ensemble d'individus autorisés.

Le dispositif de reconnaissance de l'invention peut également contenir, à l'intérieur ou à l'extérieur du périmètre sécurisé, des moyens spécifiques à une ou plusieurs applications auxquelles il est destiné (stockage de données, dans des applications telles que les téléphones portables, d'informations personnelles, pour les applications telles que les "cartes de citoyen" ou les cartes relatives à la santé, gestion de comptes, pour des applications de type porte-monnaie électronique, gestion de communication, avec un dispositif distant, tel qu'un serveur ou une machine, ...).

Avantageusement, l'ensemble des moyens détaillés ci-dessus sont placés à l'intérieur d'un périmètre sécurité 17, c'est-à-dire du circuit intégré monolithique. Il convient de noter qu'il s'agit d'un périmètre physique dans lequel un certain nombre de moyens sont installés pour interdire l'accès aux informations qui transitent, sont stockées ou traitées par tout moyen d'attaque connu.

Les moyens de sécurisation, ou de protection, peuvent notamment comprendre :
- des moyens de surveillance de l'alimentation électrique dudit dispositif ;
- des moyens de surveillance des caractéristiques de l'horloge synchronisant le fonctionnement dudit dispositif ;
- des moyens de contrôle de la température dudit dispositif ;
- des moyens de brouillage des effets électromagnétiques induits par les traitements internes au dispositif ;
- des moyens de protection anti-rayonnement ;
- des moyens de blindage électromagnétiques ;
- des moyens de blindage physique destinés à prévenir et/ou détecter toute tentative d'intrusion physique ou électrique sur le dispositif ;
- des moyens de brouillage des informations transitant, traitées, ou stockées dans le dispositif.

A titre d'exemple particulier, on considère ci-après le cas de la reconnaissance d'une empreinte digitale. Dans ce cas :
- le capteur 11 peut être un capteur thermique ;
- les moyens 12 de mise en forme effectuent un traitement numérique de l'image correspondante ;
- les moyens 13 d'extraction de caractères pertinents comprennent un calculateur réalisant l'extraction des minuties d'une empreinte digitale.

Comme déjà mentionné, le dispositif de l'invention est réalisé sous la forme d'un circuit intégré. L'implémentation du dispositif consiste alors en l'assemblage sur un même composant d'un capteur d'empreintes digitales, d'un circuit de traitement de l'image générée, d'un circuit d'extraction de paramètres pertinents (IP) basé par exemple sur le principe d'extraction de minuties, et d'un microcontrôleur sécurisé permettant la gestion de l'ensemble, ainsi que le calcul cryptographique (par le biais d'accélérateurs matériels adaptés).

La reconnaissance de l'empreinte peut être gérée à l'extérieur du composant ou à l'aide d'un logiciel adapté. L'unité de stockage 15 sera composée par exemple d'un espace de mémoire flash intégrée dans le composant.

Autour de ces blocs de base, un ensemble de moyens permettra de garantir la résistance de l'ensemble à toutes les attaques connues à ce jour.

La résistance de l'ensemble est ainsi évaluable, et évaluée, suivant les critères communs, avec une cible de protection élevée (EAL 4+) correspondant à ce qui se fait de mieux en matière de sécurité à ce jour. Il est à noter que ce type d'évaluation ne pourrait en aucun cas être obtenu ni approché avec les méthodes classiques disponibles selon l'art antérieur.

Il s'agit donc bien d'un ensemble monolithique, fabriqué classiquement par exemple par couches successives, selon des techniques de fabrication de circuits intégrés connus en soi. En ce qui concerne l'intégration du capteur, la mise en oeuvre d'une telle approche est également connue, notamment pour des capteurs photosensibles, par exemple en technologie CMOS, dans le domaine des caméras et des appareils photographiques numériques. On pourra notamment se référer aux nombreux documents de brevet relatifs à ces sujets listés dans la classe H01L27/14 de la CIB, et par exemple au document de brevet FR-2819101, dont le titulaire est ATMEL, et ayant pour titre « capteur photosensible en technologie des circuits intégrés » (non publiée à la date de priorité de la présente demande), ou encore

Les applications de ce type de composant sont toutes les applications où il est nécessaire de conditionner un accès physique ou logique (données, local...) à la présentation d'un « code » connu par la personne autorisée. En l'espèce, le « code » est une information biométrique cryptée.

Le domaine d'application de l'invention est donc très vaste. Il va du contrôle d'accès à une carte à puce (auquel cas l'algorithme de reconnaissance est placé sur la carte), au contrôle d'accès à une chambre d'hôtel, en passant par le contrôle d'accès à un produit nomade (PDA, téléphone mobile...).

Plus généralement, l'invention trouve des applications dans tous les domaines suivants :
- le contrôle d'accès physique ;
- le contrôle d'accès logique ;
- l'identification du porteur dudit dispositif ;
- la mise en oeuvre d'objets nomades ;
- les services bancaires :

- les signatures électroniques.

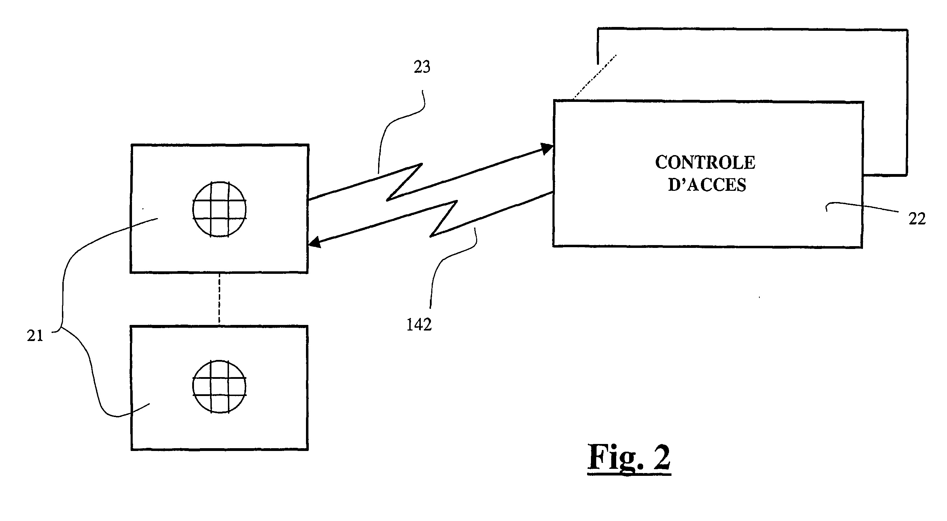

La figure 2 illustre un exemple de système mettant en oeuvre des dispositifs de reconnaissance tels que décrits plus haut.

Il comprend une pluralité de dispositifs 21 de reconnaissance, distribués à un ensemble d'individus, et au moins un dispositif de contrôle d'accès 22, capable de recevoir et de traiter les informations cryptées 23 produites par un dispositif 21, afin par exemple de commander l'ouverture d'une porte ou l'accès à un fichier.

Le dispositif de contrôle d'accès 22 comprend donc des moyens pour fournir une donnée aléatoire 142 pour le cryptage, et pour effectuer le décryptage correspondant.

Les échanges de données entre le dispositif 21 de reconnaissance et le dispositif 22 de contrôle d'accès peuvent se faire selon toutes les techniques adéquates (contact à l'aide d'un lecteur adapté, transmission à distance par voie hertzienne ou infrarouge, etc.).

Selon les applications, on peut prévoir un unique dispositif de contrôle d'accès 22 (accès à un local) ou un nombre élevé de tels dispositifs de réception (cas des applications bancaires par exemple).

Le dispositif 21 de reconnaissance peut former, ou être monté dans, un objet portatif (correspondant par exemple à une clé ou aux cartes bancaires actuelles), ou être intégré à un objet (ordinateur, portière de véhicule, ...) ou à une pièce, un bâtiment ou un site.

## Revendications

1. Dispositif de reconnaissance d'au moins un individu, **caractérisé en ce qu'**il comprend, dans un circuit intégré monolithique obtenu par l'intégration sur un même substrat de silicium de :
- au moins un capteur (11) d'informations biométriques (111),
- des moyens de traitement (12) desdites informations biométriques,
- des moyens cryptographiques (14), délivrant au moins une donnée (141) cryptée représentative d'au moins une partie desdites informations biométriques et/ou d'une information de reconnaissance correspondante, et
- des moyens de protection (17), empêchant l'accès aux données transitant, stockées et/ou traitées dans ledit circuit intégré monolithique, pour former un périmètre sécurisé,
de façon que les données (111, 121, 131) échangées par le ou lesdits capteurs (11), lesdits moyens de traitement (12) et lesdits moyens cryptographiques (14), et notamment lesdites informations biométriques, soient conservées uniquement dans ledit circuit intégré monolithique, restant inaccessibles depuis l'extérieur, et que seules des données cryptées soient délivrées à l'extérieur dudit circuit intégré monolithique.

2. Dispositif de reconnaissance d'au moins un individu selon la revendication 1, **caractérisé en ce que** lesdits moyens de protection (17) empêchant l'accès aux données comprennent au moins un des moyens appartenant au groupe comprenant :
- des moyens de surveillance de l'alimentation électrique dudit circuit intégré monolithique;
- des moyens de surveillance des caractéristiques d'une horloge synchronisant le fonctionnement dudit dispositif ;
- des moyens de contrôle de la température dudit circuit intégré monolithique;
- des moyens de brouillage des effets électromagnétiques induits par les traitements internes au dispositif ;
- des moyens de protection anti-rayonnement ;
- des moyens de blindage électromagnétiques;
- des moyens de blindage physique destinés à prévenir et/ou détecter toute tentative d'intrusion physique et/ou électrique sur le dispositif ;
- des moyens de brouillage des informations transitant, traitées et/ou stockées dans le dispositif.

3. Dispositif de reconnaissance d'au moins un individu selon l'une quelconque des revendications 1 et 2, **caractérisé en ce que** lesdites informations biométriques (111) appartiennent au groupe comprenant :
- des empreintes digitales ;
- des empreintes vocales ;
- des empreintes oculaires ;
- des caractéristiques morphologiques ;
- des caractéristiques comportementales.

4. Dispositif de reconnaissance d'au moins un individu selon l'une quelconque des revendications 1 à 3, **caractérisé en ce que** le ou lesdits capteurs (11) appartiennent au groupe comprenant :
- des capteurs thermiques ;
- des capteurs de pression ;
- des capteurs optiques ;
- des capteurs de mouvement ;
- des capteurs de rayonnement ;
- des capteurs de caractéristiques électriques ;
- des capteurs de formes physiques.

5. Dispositif de reconnaissance d'au moins un individu selon l'une quelconque des revendications 1 à 4, **caractérisé en ce que** lesdits moyens de traitement comprennent des moyens de mise en forme (12) d'au moins un signal (121) délivré par au moins un desdits capteurs (11) et des moyens d'extraction (13) dudit signal mis en forme d'au moins un caractère pertinent (131), formant une signature numérique permettant d'identifier de manière unique un individu.

6. Dispositif de reconnaissance d'au moins un individu selon l'une quelconque des revendications 1 à 5, **caractérisé en ce que** lesdits moyens cryptographiques (14) délivrent une signature cryptographique (141), calculée à l'aide d'au moins une clé stockée dans une unité de stockage (15) dudit circuit intégré monolithique.

7. Dispositif de reconnaissance d'au moins un individu selon la revendication 8, **caractérisé en ce que** ladite signature cryptographique (141) tient compte également d'au moins un paramètre aléatoire (142) généré et communiqué par des moyens indépendants dudit circuit intégré monolithique.

8. Dispositif de reconnaissance d'au moins un individu selon l'une quelconque des revendications 1 à 7, **caractérisé en ce qu'**il comprend des moyens de reconnaissance (16) d'au moins un individu, en fonction de données de référence stockées dans ledit circuit intégré monolithique.

9. Dispositif de reconnaissance d'au moins un individu selon la revendication 8, **caractérisé en ce que** lesdits moyens de reconnaissance (16) délirent une information de reconnaissance, indiquant si un individu est ou non reconnu, ladite information de reconnaissance étant cryptée avant d'être émise à l'extérieur dudit circuit intégré monolithique.

10. Dispositif de reconnaissance d'au moins un individu selon l'une quelconque des revendications 1 à 9, **caractérisé en ce que** ledit circuit intégré monolithique comprend une unité de stockage (15) comprenant au moins un des éléments appartenant au groupe comprenant :
- au moins une clé cryptographique ;
- au moins un mécanisme de traitement sécurisé de clés cryptographiques ;
- au moins une donnée de référence représentative d'un individu ;
- des données et/ou des programmes nécessaires à la mise en oeuvre des moyens présents dans ledit circuit intégré monolithique.

11. Dispositif de reconnaissance d'au moins un individu selon la revendication 10, **caractérisé en ce que** ladite unité de stockage (15) comprend au moins une mémoire de données numériques.

12. Dispositif de reconnaissance d'au moins un individu selon la revendication 11, **caractérisé en ce que** ladite ou lesdites mémoires de données numériques appartiennent au groupe comprenant les mémoires flash, les mémoires EEPROM, les mémoires EPROM, les mémoires ROM, les mémoires RAM, les mémoires FeRAM, les mémoires MRAM, les mémoires magnétiques.

13. Dispositif de reconnaissance d'au moins un individu selon l'une quelconque des revendications 1 à 12, **caractérisé en ce que** ledit circuit intégré monolithique comprend un capteur (11) d'empreintes digitales, délivrant une image d'empreinte, des moyens de traitement (12) de l'image générée et des moyens d'extraction (13) de minuties sur l'image traitée.

14. Dispositif de reconnaissance d'au moins un individu selon l'une quelconque des revendications 1 à 13, **caractérise en ce que** lesdites moyens de cryptographie (14) mettent en oeuvre au moins un accélérateur de calculs matériel.

15. Procédé de reconnaissance d'au moins un individu, **caractérisé en ce qu'**il comprend les étapes suivantes, intégralement à l'intérieur d'un circuit intégré monolithique définissant un périmètre sécurisé (17) :
- obtention d'informations biométriques dudit individu, à l'aide d'au moins un capteur (11) intégré audit circuit intégré monolithique;
- traitement desdites informations biométriques ;
- cryptage d'au moins une partie desdites informations biométriques (141) et/ou d'une information de reconnaissance correspondante ;
- transmission vers l'extérieur des données cryptées (141),
- mise en oeuvre de moyens de protection empêchant l'accès aux données transitant, stockées ou traitées dans ledit périmètre de sécurité (17) défini par le circuit monolithique; de façon que les données (111, 121, 131) délivrées par les étapes d'obtention et de traitement soient conservées uniquement dans ledit circuit intégré monolithique, restant inaccessibles depuis l'extérieur, et que seules des données cryptées (141) soient délivrées à l'extérieur dudit circuit intégré monolithique.

16. Procédé de reconnaissance d'au moins un individu selon l'une quelconque des revendications (15), **caractérisé en ce qu'**il met en oeuvre au moins un dispositif de reconnaissance (16) comprenant ledit circuit intégré monolithique et au moins un dispositif de contrôle d'accès (22) communiquant avec ledit dispositif de reconnaissance, apte à recevoir et traiter des données cryptées délivrées par le ou lesdits dispositifs de reconnaissance (16), et à autoriser ou à interdire en conséquence un accès à au moins une donnée, au moins un objet et/ou au moins un lieu.

17. Dispositif de contrôle d'accès comprenant des moyens d'autorisation ou d'interdiction d'accès à au moins une donnée, au moins un objet et/ou au moins un lieu, **caractérisé en ce qu'**il comprend des moyens (23) pour recevoir et traiter des données cryptées délivrées par au moins un dispositif de reconnaissance (21) d'au moins un individu selon l'une quelconque des revendications 1 à 14.

18. Système de contrôle d'accès à au moins une donnée, au moins un objet et/ou au moins un lieu, **caractérisé en ce qu'**il comprend au moins dispositif de reconnaissance (16) d'au moins un individu selon l'une quelconque des revendications 1 à 14 et au moins un dispositif de contrôle (22) d'accès selon la revendication 17.

19. Application d'un dispositif de reconnaissance d'au moins un individu selon l'une quelconque des revendications 1 à 14 et/ou d'un procédé de reconnaissance d'au moins un individu selon l'une quelconque des revendications 15 ou 16 à au moins un des domaines appartenant au groupe comprenant :
- le contrôle d'accès physique ;
- le contrôle d'accès logique ;
- l'identification du porteur dudit dispositif ;
- la mise en oeuvre d'objets nomades ;
- les services bancaires ;
- les signatures électroniques.

## Claims

1. Device for recognising at least one individual, **characterized in that** it comprises, in a monolithic integrated circuit which is obtained by integrating, on a single silicon substrate:
- at least one sensor (11) for biometric information (111),
- means for processing (12) said biometric information,
- cryptographic means (14), which supply at least one encrypted data item (141), representing at least part of said biometric information and/or of a corresponding recognition information item, and
- protection means (17), which prevent access to data which are passing through, stored and/or processed in said monolithic integrated circuit, to form a secured perimeter,
in such a way that the data (111, 121, 131) which are exchanged by said sensors (11), said processing means (12) and said cryptographic means (14), and in particular said biometric information, are kept only in said monolithic integrated circuit, remaining inaccessible from outside, and only the encrypted data are supplied to the outside of said monolithic integrated circuit.

2. Device for recognising at least one individual according to Claim 1, **characterized in that** said protection means (17), which prevent access to the data, comprise at least one of the means belonging to the group comprising:
- means for monitoring the electrical power supply of said monolithic integrated circuit;
- means for monitoring the characteristics of a clock which synchronises the functioning of said device;
- means for controlling the temperature of said monolithic integrated circuit;
- means for scrambling electromagnetic effects which are induced by the internal processing on the device;
- anti-radiation protection means;
- electromagnetic screening means;
- physical screening means, intended to prevent and/or detect any attempt at physical and/or electrical intrusion on the device;
- means for scrambling information which is passing through, processed in and/or stored in the device.

3. Device for recognising at least one individual according to anyone of Claims 1 and 2, **characterized in that** said biometric information (111) belongs to the group comprising:
- fingerprints;
- voiceprints;
- iris patterns;
- morphological characteristics;
- behavioural characteristics.

4. Device for recognising at least one individual according to anyone of Claims 1 to 3, **characterized in that** the said sensor (s) belong (s) to the group comprising:
- thermal sensors;
- pressure sensors;
- optical sensors;
- movement sensors;
- radiation sensors;
- electrical characteristic sensors;
- physical shape sensors.

5. Device for recognising at least one individual according to anyone of Claims 1 to 4, **characterized in that** said processing means comprise means for shaping (12) at least one signal (121) which is supplied by at least one of said sensors (11), and means for extracting (13) from said shaped signal at least one relevant characteristic (131), forming a digital signature which makes unique identification of an individual possible.

6. Device for recognising at least one individual according to anyone of Claims 1 to 5, **characterized in that** said cryptographic means (14) supply a cryptographic signature (141), which is calculated using at least one key stored in a storage unit (15) of said monolithic integrated circuit.

7. Device for recognising at least one individual according to Claim 8, **characterized in that** said cryptographic signature (141) also takes account of at least one random parameter (142), which is generated and communicated by means which are independent from said monolithic integrated circuit.

8. Device for recognising at least one individual according to anyone of Claims 1 to 7, **characterized in that** it includes means for recognising (16) at least one individual, as a function of reference data which are stored in said monolithic integrated circuit.

9. Device for recognising at least one individual according to Claim 8, **characterized in that** said recognition means (16) supply a recognition information item, indicating whether an individual is or is not recognised, said recognition information being encrypted before being output to the outside of said monolithic integrated circuit.

10. Device for recognising at least one individual according to anyone of Claims 1 to 9, **characterized in that** said monolithic integrated circuit includes a storage unit (15) which includes at least one of the elements belonging to the group comprising:
- at least one cryptographic key;
- at least one mechanism for secured processing of cryptographic keys;
- at least one reference data item representing an individual;
- data and/or programs which are necessary for implementing means which are present in said monolithic integrated circuit.

11. Device for recognising at least one individual according to Claim 10, **characterized in that** said storage unit (15) includes at least one digital data memory.

12. Device for recognising at least one individual according to Claim 11, **characterized in that** said digital data memory/ies belong(s) to the group comprising flash memories, EEPROM memories, EPROM memories, ROM memories, RAM memories, FeRAM memories, MRAM memories, magnetic memories.

13. Device for recognising at least one individual according to anyone of Claims 1 to 12, **characterized in that** said monolithic integrated circuit includes a sensor (11) for fingerprints, supplying an image of the print, means for processing (12) the generated image, and means for extracting (13) minutiae of the processed image.

14. Device for recognising at least one individual according to anyone of Claims 1 to 13, **characterized in that** said cryptographic means (14) implement at least one hardware computing accelerator.

15. Method of recognising at least one individual, **characterized in that** it comprises the following steps, integrally within a monolithic integrated circuit defining a secured perimeter (17):
- obtaining biometric information of said individual, using at least one sensor (11) which is integrated with said monolithic integrated circuit;
- processing said biometric information;
- encrypting at least part of said biometric information (141) and/or a corresponding recognition information item;
- transmitting the encrypted data (141) to the outside;
- implementing protection means which prevent access to data which are passing through, stored in or processed in said security perimeter (17) which is defined by the monolithic circuit;
in such a way that the data (111, 121, 131) which are supplied by the obtaining and processing stages are kept only in said monolithic integrated circuit, remaining inaccessible from outside, and that only the encrypted data (141) are supplied to the outside of said monolithic integrated circuit.

16. Method of recognising at least one individual according to Claim 15, **characterized in that** it implements at least one recognition device (16) comprising said monolithic integrated circuit and at least one access control device (22) which communicates with said recognition device, and is capable of receiving and processing encrypted data which are supplied by said recognition device(s) (16), and of consequently authorising or prohibiting access to at least one data item, at least one object and/or at least one location.

17. Access control device comprising means for authorising or prohibiting access to at least one data item, at least one object and/or at least one location, **characterized in that** it includes means (23) for receiving and processing encrypted data which are supplied by at least one device for recognising (21) at least one individual, according to anyone of Claims 1 to 14.

18. System for control of access to at least one data item, at least one object and/or at least one location, **characterized in that** it includes at least one device for recognising (16) at least one individual according to any one of Claims 1 to 14, and at least one access control device (22) according to Claim 17.

19. Application of a device for recognising at least one individual according to anyone of Claims 1 to 14 and/or of a method of recognising at least one individual according to any one of Claims 15 or 16 to at least one of the fields belonging to the group comprising:
- control of physical access;
- control of logical access;
- identification of the carrier of said device;
- implementing mobile objects;
- banking services;
- electronic signatures.

## Patentansprüche

1. Vorrichtung zur Erkennung mindestens einer Person, **dadurch gekennzeichnet, dass** sie in einer monolithischen integrierten Schaltung, die durch die Integration von Folgendem auf einem gleichen Siliciumsubstrat erhalten wird, Folgendes umfasst:
- mindestens einen Sensor (11) für biometrische Informationen (111),
- Mittel zur Verarbeitung (12) der biometrischen Informationen,
- Verschlüsselungsmittel (14), die mindestens ein verschlüsseltes Datenelement (141) liefern, das für mindestens einen Abschnitt der biometrischen Informationen und/oder eine entsprechende Erkennungsinformation charakteristisch ist, und
- Schutzmittel (17), die den Zugriff auf die in der monolithischen integrierten Schaltung versandten, gespeicherten und/oder verarbeiteten Daten verhindert, um einen gesicherten Bereich zu bilden,
derart, dass die durch den oder die Sensoren (11), die Verarbeitungsmittel (12) und die Verschlüsselungsmittel (14) ausgetauschten Daten (111, 121, 131) und insbesondere die biometrischen Informationen einzig in der monolithischen integrierten Schaltung aufbewahrt werden und von Außen unzugänglich bleiben und dass einzig verschlüsselte Daten an das Äußere der monolithischen integrierten Schaltung geliefert werden.

2. Vorrichtung zur Erkennung mindestens einer Person nach Anspruch 1, **dadurch gekennzeichnet, dass** die Schutzmittel (17), die den Zugriff auf die Daten verhindern, mindestens eines der Mittel umfassen, die zu der Gruppe gehören, die Folgendes umfasst:
- Mittel zur Überwachung der Stromversorgung der monolithischen integrierten Schaltung;
- Mittel zur Überwachung der Eigenschaften eines Taktgebers, der die Funktion der Vorrichtung synchronisiert;
- Mittel zur Kontrolle der Temperatur der monolithischen integrierten Schaltung;
- Mittel zur Störung der elektromagnetischen Wirkungen, die durch die Verarbeitungen in der Vorrichtung induziert werden;
- Strahlenschutzmittel;
- Mittel zur elektromagnetischen Abschirmung;
- Mittel zur physischen Abschirmung, die dazu bestimmt sind, jeden Versuch eines physischen und/oder elektrischen Eindringens in die Vorrichtung zu verhindern und/oder zu ermitteln;
- Mittel zur Störung der in der Vorrichtung versandten, verarbeiteten und/oder gespeicherten Informationen.

3. Vorrichtung zur Erkennung mindestens einer Person nach einem der Ansprüche 1 und 2, **dadurch gekennzeichnet, dass** die biometrischen Informationen (111) zur Gruppe gehören, die Folgendes umfasst:
- Fingerabdrücke;
- Stimmabdrücke;
- Augenabdrücke;
- morphologische Eigenschaften;
- Verhaltenseigenschaften.

4. Vorrichtung zur Erkennung mindestens einer Person nach einem der Ansprüche 1 bis 3, **dadurch gekennzeichnet, dass** der oder die Sensoren (11) zur Gruppe gehören, die Folgendes umfasst:
- Wärmesensoren;
- Drucksensoren;
- optische Sensoren;
- Bewegungssensoren;
- Strahlungssensoren;
- Sensoren für elektrische Eigenschaften;
- Sensoren für physische Formen.

5. Vorrichtung zur Erkennung mindestens einer Person nach einem der Ansprüche 1 bis 4, **dadurch gekennzeichnet, dass** die Verarbeitungsmittel Mittel zur Transformation (12) von mindestens einem Signal (121), das durch mindestens einen der Sensoren (11) geliefert wird, und Mittel zur Gewinnung (13) von mindestens einem beweiskräftigen Merkmal (131) aus dem transformierten Signal umfassen, wobei eine digitale Signatur gebildet wird, die die eindeutige Identifikation einer Person ermöglicht.

6. Vorrichtung zur Erkennung mindestens einer Person nach einem der Ansprüche 1 bis 5, **dadurch gekennzeichnet, dass** die Verschlüsselungsmittel (14) eine kryptographische Signatur (141) liefern, die mittels eines Schlüssels berechnet wird, der in einer Speichereinheit (15) der monolithischen integrierten Schaltung gespeichert ist.

7. Vorrichtung zur Erkennung mindestens einer Person nach Anspruch 8, **dadurch gekennzeichnet, dass** die kryptographische Signatur (141) auch mindestens einen Zufallsparameter (142) berücksichtigt, der von Mitteln erzeugt und übermittelt wird, die unabhängig von der monolithischen integrierten Schaltung sind.

8. Vorrichtung zur Erkennung mindestens einer Person nach einem der Ansprüche 1 bis 7, **dadurch gekennzeichnet, dass** sie Mittel zur Erkennung (16) mindestens einer Person in Abhängigkeit von Bezugsdaten umfasst, die in der monolithischen integrierten Schaltung gespeichert sind.

9. Vorrichtung zur Erkennung mindestens einer Person nach Anspruch 8, **dadurch gekennzeichnet, dass** die Erkennungsmittel (16) eine Erkennungsinformation liefern, die angibt, ob eine Person erkannt wird oder nicht, wobei die Erkennungsinformation verschlüsselt wird, bevor Sie ans Äußere der monolithischen integrierten Schaltung gesendet wird.

10. Vorrichtung zur Erkennung mindestens einer Person nach einem der Ansprüche 1 bis 9, **dadurch gekennzeichnet, dass** die monolithische integrierte Schaltung eine Speichereinheit (15) umfasst, die mindestens eines der Elemente umfasst, die zur Gruppe gehören, die Folgendes umfasst:
- mindestens einen kryptographischen Schlüssel;
- mindestens einen Mechanismus zur gesicherten Verarbeitung von kryptographischen Schlüsseln;
- mindestens ein Bezugsdatenelement, das für eine Person charakteristisch ist;
- Daten und/oder Programme, die für den Einsatz der Mittel erforderlich sind, die in der monolithischen integrierten Schaltung vorhanden sind.

11. Vorrichtung zur Erkennung mindestens einer Person nach Anspruch 10, **dadurch gekennzeichnet, dass** die Speichereinheit (15) mindestens einen Speicher für digitale Daten umfasst.

12. Vorrichtung zur Erkennung mindestens einer Person nach Anspruch 11, **dadurch gekennzeichnet, dass** der oder die Speicher für digitale Daten zur Gruppe gehören, die Flash-Speicher, EEPROM-Speicher, EPROM-Speicher, ROM-Speicher, RAM-Speicher, FeRAM-Speicher, MRAM-Speicher und Magnetspeicher umfasst.

13. Vorrichtung zur Erkennung mindestens einer Person nach einem der Ansprüche 1 bis 12, **dadurch gekennzeichnet, dass** die monolithische integrierte Schaltung einen Sensor (11) für Fingerabdrücke, der ein Abdruckbild liefert, Mittel zur Verarbeitung (12) des erzeugten Bildes und Mittel zur Gewinnung (13) von Kleinigkeiten auf dem verarbeiteten Bild umfasst.

14. Vorrichtung zur Erkennung mindestens einer Person nach einem der Ansprüche 1 bis 13, **dadurch gekennzeichnet, dass** die Verschlüsselungsmittel (14) mindestens einen Hardware-Rechenbeschleuniger einsetzen.

15. Verfahren zur Erkennung mindestens einer Person, **dadurch gekennzeichnet, dass** es, vollständig innerhalb einer monolithischen integrierten Schaltung, die einen gesicherten Bereich (17) definiert, die folgenden Schritte umfasst:
- Erhalt biometrischer Informationen von der Person mittels mindestens eines Sensors (11), der in die monolithische integrierte Schaltung integriert ist;
- Verarbeitung der biometrischen Informationen;
- Verschlüsselung von mindestens einem Abschnitt der biometrischen Informationen (141) und/oder einer entsprechenden Erkennungsinformation;
- Übermittlung der verschlüsselten Daten (141) nach außen;
- Einsatz von Schutzmitteln, die den Zugriff auf die Daten verhindern, die im durch die monolithische Schaltung definierten Sicherheitsbereich (17) versandt, gespeichert oder verarbeitet werden; derart, dass die Daten (111, 121, 131), die durch die Schritte des Erhalts und der Verarbeitung geliefert werden, einzig in der monolithischen integrierten Schaltung aufbewahrt werden, wobei sie von Außen unzugänglich bleiben, und einzig die verschlüsselten Daten (141) an das Äußere der monolithischen integrierten Schaltung geliefert werden.

16. Verfahren zur Erkennung mindestens einer Person nach Anspruch 15, **dadurch gekennzeichnet, dass** es mindestens eine Erkennungsvorrichtung (16), die die monolithische integrierte Schaltung umfasst, und mindestens eine Zugangskontrollvor-richtung (22) einsetzt, die mit der Erkennungsvorrichtung in Verbindung steht und imstande ist, durch die Erkennungsvorrichtungen (16) gelieferte verschlüsselte Daten zu empfangen und zu verarbeiten und dementsprechend einen Zugang zu mindestens einem Datenelement, mindestens einem Gegenstand und/oder mindestens einem Ort zu erlauben oder zu untersagen.

17. Zugangskontrollvorrichtung, die Mittel zur Erlaubnis oder zur Untersagung des Zugangs zu mindestens einem Datenelement, mindestens einem Gegenstand und/oder mindestens einem Ort umfasst, **dadurch gekennzeichnet, dass** sie Mittel (23) zum Empfangen und Verarbeiten von durch mindestens eine Vorrichtung (21) zur Erkennung mindestens einer Person nach einem der Ansprüche 1 bis 14 gelieferten verschlüsselten Daten umfasst.

18. System zur Kontrolle des Zugangs zu mindestens einem Datenelement, mindestens einem Gegenstand und/oder mindestens einem Ort, **dadurch gekennzeichnet, dass** es mindestens eine Vorrichtung zur Erkennung (16) mindestens einer Person nach einem der Ansprüche 1 bis 14 und mindestens eine Zugangskontrollvorrichtung (22) nach Anspruch 17 umfasst.

19. Anwendung einer Vorrichtung zur Erkennung mindestens einer Person nach einem der Ansprüche 1 bis 14 und/oder eines Verfahrens zur Erkennung mindestens einer Person nach einem der Ansprüche 15 oder 16 auf mindestens einem der Gebiete, die zur Gruppe gehören, die Folgendes umfasst:
- die physische Zugangskontrolle;
- die logische Zugangskontrolle;
- die Identifikation des Trägers der Vorrichtung;
- den Einsatz von nomadischen Gegenständen;
- Bankdienstleistungen;
- elektronische Signaturen.
